Europäisches Patentamt

European Patent Office

Office européen des brevets

(11) Veröffentlichungsnummer: **0 332 848**
**A2**

# (12) EUROPÄISCHE PATENTANMELDUNG

(21) Anmeldenummer: **89102315.2**

(51) Int. Cl.⁴: **G01N 19/02**

(22) Anmeldetag: **10.02.89**

(30) Priorität: **14.03.88 DE 3808454**

(43) Veröffentlichungstag der Anmeldung:
**20.09.89 Patentblatt 89/38**

(84) Benannte Vertragsstaaten:
**AT CH FR GB IT LI**

(71) Anmelder: **Funck, Herbert, Dr.-Ing.**
**Am Wasserbogen 43**
**D-8032 Gräfelfing-Lochham(DE)**

(72) Erfinder: **Funck, Herbert, Dr.-Ing.**
**Am Wasserbogen 43**
**D-8032 Gräfelfing-Lochham(DE)**

(74) Vertreter: **Patentanwälte Beetz sen. - Beetz jun. Timpe - Siegfried - Schmitt-Fumian-Mayr**
**Steinsdorfstrasse 10**
**D-8000 München 22(DE)**

(54) **Verfahren und Vorrichtung zur Bestimmung des Reibungsverhaltens von Schuhen auf Bodenbelägen.**

(57) Gegenstand der Erfindung ist ein Verfahren und eine Vorrichtung zur Bestimmung des Reibungsverhaltens bzw. der Rutschgrenze von Schuhen auf Bodenbelägen. Ein auf einem Prüffuß (1) angeordneter Oberschuh (32) wird zyklisch und mit einstellbarer Absenkkraft auf den Bodenbelag (27) abgesenkt und eine beginnende Rutschbewegung seiner Laufsohle auf dem Bodenbelag wird als Maß für die Reibung zwischen der Laufsohle und dem Bodenbelag erfaßt. Erfindungsgemäß wird der Prüffuß bzw. der Schuh während eines Prüfvorganges mit einem vorbestimmten Drehmoment um sein Knöchel- bzw. Fußgelenk (2) verschwenkt, so daß dieses Gelenk dabei eine Bewegung in Fußlängsrichtung ausführt. Eine entgegen dieser Längsbewegung wirkende Kraft wird stufenweise so lange verändert, bis die Vorwärtsbewegung des Fußgelenks (2) aufhört und die Laufsohle auf dem Belag zu rutschen beginnt. Aus der Größe dieser Gegenkraft wird der Reibungswert der Werkstoffpaarung berechnet.

Fig. 1

## Verfahren und Vorrichtung zur Bestimmung des Reibungsverhaltens von Schuhen auf Bodenbelägen

Die Erfindung betrifft ein Verfahren zur Bestimmung des Reibungsverhaltens, insbesondere der Rutschgrenze, von Schuhen auf Bodenbelägen, bei dem ein auf einem Prüffuß angeordneter Schuh zyklisch und mit einstellbarer Absenkkraft auf den Bodenbelag abgesenkt und eine beginnende Rutschbewegung seiner Laufsohle auf dem Bodenbelag als Maß für die Haftreibung zwischen der Laufsohle und dem Bodenbelag erfaßt wird. Ferner bezieht sich die Erfindung auf eine entsprechende Vorrichtung, die in einem gemeinsamen Rahmen eine Tragkonstruktion für den Bodenbelag, einen über ein Knöchelgelenk und ein Gelenkgestänge an einer Hubvorrichtung befestigten Prüffuß, der mit einstellbarer Kraft auf den Bodenbelag absenkbar ist, und Steuermittel aufweist, die beim Abrutschen des abgesenkten Schuhs auf dem Bodenbelag den Reibungswert bestimmen.

Aus der DE-PS 36 35 263 sind ein derartiges Verfahren und eine Vorrichtung zum Ermitteln der Haftreibung von Schuhen auf Bodenbelägen bekannt, bei dem ein auf einem als Leisten ausgebildeten Prüffuß aufgespannter Schuh zyklisch und mit einstellbarer Kraft auf den in einer Tragkonstruktion festgelegten Bodenbelag aufgesetzt wird. Vor jedem Prüfvorgang wird der Neigungswinkel des Bodenbelags gegenüber dem vorangehenden Prüfvorgang erhöht. Diese Prüfvorgänge werden so lange wiederholt, bis der Schuh beim Aufsetzen auf den Bodenbelag unter gleichzeitiger Verdrehung in seinem Fußgelenk ausgleitet. Über eine geeignete Klemmhalterung kann der Schuh vor jedem Aufsetzen mit dem Neigungswinkel des vorhergehenden Prüfvorgangs geneigt sein und beim Aufsetzen auf den Bodenbelag unter Überwindung einer vorbestimmten Bremskraft bis zum größeren neuen Neigungswinkel des Bodenbelags verdreht werden. Obgleich die mit diesem bekannten Vorgehen erhaltenen Meßergebnisse eine gegenüber älteren Methoden erheblich verbesserte Aussagekraft haben und auch die Prüfung wesentlich einfacher und schneller vorgenommen werden kann, sprechen die Meßergebnisse nicht exakt das beim Gehen auftretende Reibungs-bzw. Rutschverhalten des Schuhs an, da die bei jedem Schritt auftretende Abrollbewegung des Schuhs nicht nachgeahmt bzw. simuliert werden kann.

Aufgabe der Erfindung ist es, ein Verfahren zur Bestimmung des Reibungsverhaltens von Schuhen auf einem Bodenbelag aufzuzeigen, das durch eine der Gehbewegung ähnliche Abrollbewegung des Schuhs auf dem Bodenbelag praxisgerechtere Meßergebnisse liefert. Ferner soll eine zur Durchführung dieses Verfahrens besonders geeignete Vorrichtung geschaffen werden, die konstruktiv einfach und dadurch preiswert ist, so daß auch Anwendern in der Schuhbranche die Möglichkeit gegeben wird, an ihren Erzeugnissen Reibzahlbestimmungen durchzuführen.

Diese Aufgabe wird erfindungsgemäß dadurch gelöst, daß der Schuh während eines Prüfvorganges mit einem vorbestimmten Drehmoment um sein Fußgelenk verschwenkt wird, welches dabei eine Bewegung in Schuhlängsrichtung ausführt, daß eine entgegen dieser Längsbewegung wirkende Gegenkraft von steuerbarer Größe erzeugt wird und daß diejenige Größe dieser Gegenkraft erfaßt wird, bei welcher das Fußgelenk unter gleichzeitigem Durchrutschen der Laufsohle auf dem Bodenbelag zum Stillstand kommt.

Die Erfindung geht von der Erkenntnis aus, daß der menschliche Fuß bei jedem Schritt zuerst mit der hinteren Absatzkante aufgesetzt wird, wobei das Fuß- bzw. Knöchelgelenk in diesem Zustand eine bestimmte Höhe von der Bodenaufstandsfläche hat. Im weiteren Verlauf wird über die Unterschenkelmuskulatur die weitgehend vollständig auf der Aufstandsfläche aufliegende Fußsohle mit dem Körpergewicht voll belastet, wobei bis zu diesem Zustand, d h. bis zur vollen Auflage der Sohle auf der Aufstandsfläche, das Knöchelgelenk eine bogenförmige Absenkbewegung in Längsrichtung des Fußes ausführt. In der sich anschließenden Abrollphase erzeugt die Beinmuskulatur eine nach aufwärts-vorwärts gerichtete Kraft, deren Größe das jeweilige Körpergewicht übersteigt und die eine nach vorne gerichtete Anhebebewegung des Fußes bewirkt, dessen Sohle dann nur noch mit der Sohlenspitze auf die Aufstandsfläche gedrückt wird. In dieser Bewegungsphase führt das Knöchelgelenk eine bogenförmige Bewegung nach vorn aufwärts aus.

Beim erfindungsgemäßen Vorgehen wird dieser Abrollvorgang des Prüffußes durch seine Schwenkbewegung um das Fuß- bzw. Knöchelgelenk bei gleichzeitiger horizontaler Verschiebemöglichkeit zwischen dem Prüffuß und dem Bodenbelag simuliert, wobei eine Überlagerung einer im wesentlichen senkrechten Bewegung unter einer dem Körpergewicht in etwa entsprechenden Belastung mit einer waagerechten Bewegungsmöglichkeit des Prüffußes und seines Knöchelgelenks stattfindet. Das in vorgegebenen Größen im Fußgelenk erzeugte Drehmoment simuliert die bei einem Schritt während des Abrollvorganges von der Unterschenkelmuskulatur auf den Fuß übertragenen Kräfte bzw Momente.

Erfindungsgemäß wirkt der waagerechten Bewegungskomponente des Prüffußes eine horizontale Kraft von einstellbarer Größe entgegen. Der Prüffuß führt so lange eine Abrollbewegung nach vorne aus, solange diese entgegenwirkende Kraft die Haftkraft zwischen der Schuhsohle und dem Bodenbelag nicht übersteigt. Wenn die vertikale aus dem Körpergewicht des Trägers resultierende Kraft mit $F_N$ (Normalkraft) und die die Haftreibung begrenzende horizontale Gegenkraft mit $F_R$ - (Reibkraft) bezeichnet wird, dann errechnet sich die Reibzahl $M_y$ für die geprüfte Reibpaarung Prüfschuh/Bodenbelag nach der Beziehung

$$M_y = \frac{F_R}{F_N} \, .$$

Erfindungsgemäß wird die horizontale Gegenkraft $F_R$ bei jedem Prüfvorgang um einen vorgegebenen Betrag geändert, bis die durch den Abrollvorgang des Prüffußes erfolgende horizontale Vorwärtsbewegung unterbunden wird und die Laufsohle auf dem Bodenbelag durchrutscht.

Neben der Haftreibungsgrenze kann mit dem erfindungsgemäßen Vorgehen auch die Gleitreibungsgrenze der betreffenden Reibpaarung bestimmt werden. In diesem Fall wird die der horizontalen Vorwärtsbewegung des Prüffußes entgegenwirkende Kraft bei Versuchsbeginn so hoch gewählt, daß der Prüffuß zumindest beim ersten Prüfvorgang nicht abrollt, sondern gleitet. Diese Gegenkraft wird in den nachfolgenden Prüfvorgängen schrittweise so lange vermindert, bis das Gleiten des Schuhs auf dem Bodenbelag in ein Haften und damit eine Abrollbewegung ohne Gleiten übergeht. Nach der vorstehend angegebenen Formel kann dann die Reibzahl für die Gleitreibungsgrenze errechnet werden.

Im folgenden werden Ausführungsbeispiele der Erfindung anhand der Zeichnung im einzelnen beschrieben. Es zeigen:

    Fig. 1 schematisch eine Prüfvorrichtung in teilgeschnittener Frontansicht;

    Fig. 2 schematisch die gelenkige und horizontal verschiebbare Aufhängung des Prüffußes in verschiedenen Phasen eines Prüfvorganges in teilgeschnittener Seitenansicht.

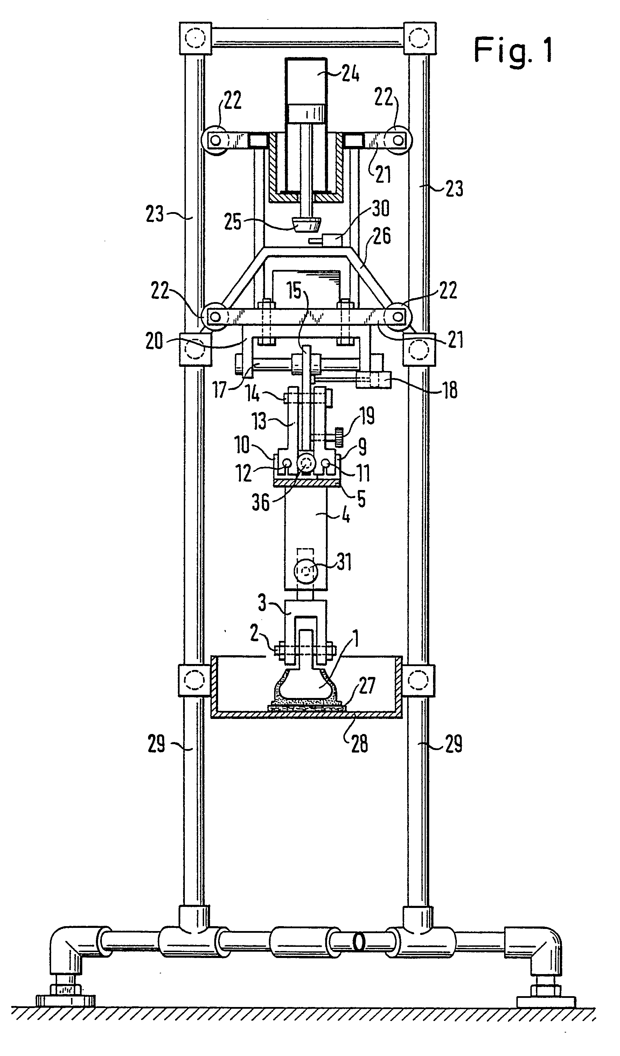

Bei der in Fig. 1 im Maßstab von etwa 1 : 8 dargestellten Prüfvorrichtung ist ein Prüffuß 1 mit darauf befestigtem Oberschuh um ein Knöchelbzw. Fußgelenk 2 schwenkbar in einer bügelförmigen Fußaufnahme 3 gelagert, die mittels einer Zapfenverbindung auswechselbar in einem vertikalen Träger 4 montiert ist. Dieser Träger 4 ist mit seinem oberen Ende an einer formsteifen horizontalen Tragplatte 5 befestigt, auf deren Endabschnitten je zwei Lagerböcke 7, 8 und 9, 10 montiert sind. In je zwei gleichachsig angeordneten Lagerböcken 7, 9 und 8, 10 ist je eine Stange 11, 12 geführt, die jeweils mittig an gabelförmigen Enden von zwei zueinander parallelen vertikalen Laschen 13 festgeklemmt sind. Ein Tragbolzen 14 verbindet die oberen Enden der beiden Laschen 13 schwenkbar mit einer Platte 15, die auf zwei horizontalen und voneinander beabstandeten Querstangen 16, 17 bei Betätigung eines Druckmittelzylinders 18 quer zur Längsachse des Prüffußes verschiebbar ist (vgl. Fig. 1).

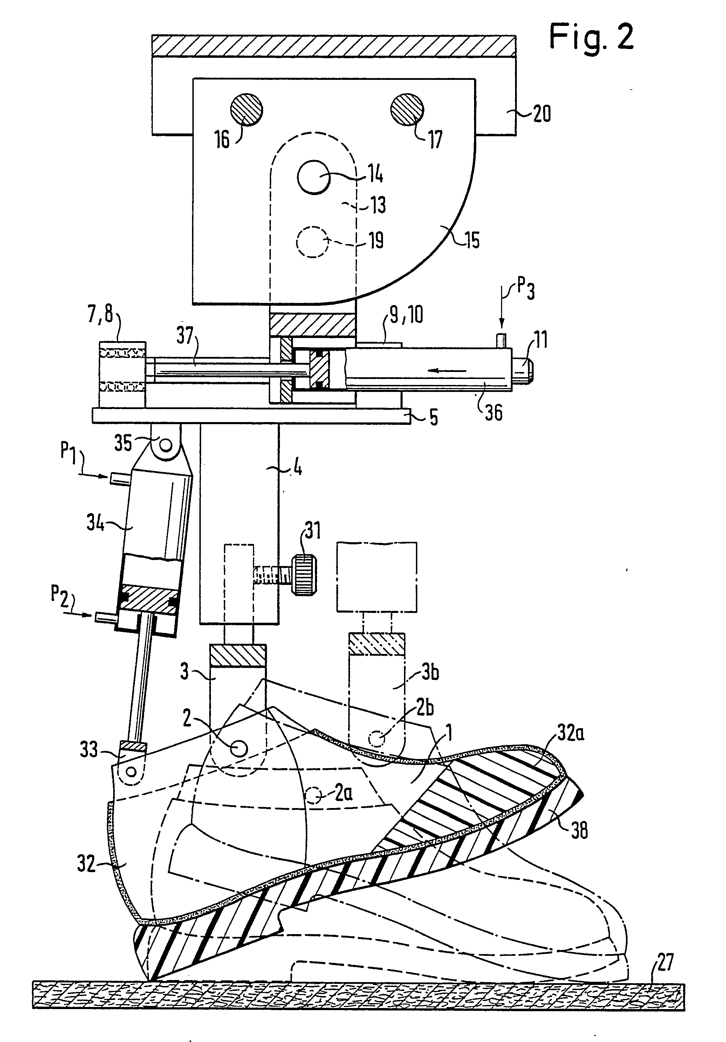

Wie aus Fig. 2 ersichtlich, ist die vordere untere Ecke der sonst rechteckigen Platte 15 durch einen Bogen ersetzt, der Verschwenkungen der beiden Laschen 13 um den Querbolzen 14 zuläßt. Mittels einer Klemmschraube 19 können die beiden Laschen 13 gegenüber der vertikalen Platte 15 festgeklemmt werden. Die beiden Stangen 16, 17 sind in einem im Querschnitt U-förmigen Träger 20 befestigt, der an der Unterseite eines Trägerwagens 21 angeschraubt ist. Dieser Trägerwagen 21 läuft mittels acht Rollen 22 an vier vertikalen Säulen 23 und trägt einen Druckmittelzylinder 24, dessen Kolbenstange einen verdickten Kopf 25 besitzt, der in einen Stützkontakt mit einer Brücke 26 gelangen kann. Durch Beaufschlagung des Zylinders 24 mit Druckmittel führt der Zylinder 24 zusammen mit dem damit verstrebten Trägerwagen 21 und dem daran aufgehängten Trägerfuß vertikale Anhebe- und Absenkbewegungen aus.

Unter dem Prüffuß befindet sich ein auswechselbarer Zuschnitt 27 eines Bodenbelags in einer Wanne 28, die durch Klemmverbinder od. dgl. am Maschinengestell 29 in einer geeigneten Höhe festgelegt ist.

Die Absenk- und Anhebebewegungen des Prüffußes und seiner Tragkonstruktion werden mit Hilfe des Druckmittelzylinders 24 ausgeführt. Die während des eigentlichen Prüfvorganges notwendige Belastung des Prüffußes erfolgt bei wirkungslosem Zylinder 24 durch Gewichte, die in einer entsprechenden Anzahl auf dem Trägerwagen 21 angeordnet werden. Sobald der Prüffuß 1 bei seiner Abwärtsbewegung auf den Bodenbelag 27 auftrifft, bewegt sich die Kolbenstange im Zylinder 24 weiter nach oben, so daß der Prüffuß 1 nunmehr nur noch vom Gesamtgewicht des Trägerwagens bzw. den darauf befindlichen Gewichten und der Tragkonstruktion belastet wird. Zur Entlüftung bzw. Umschaltung des Zylinders 24 dient ein von dem Kopf 25 der Kolbenstange betätigter Schalter 30, der auf der Brücke 26 montiert ist.

Fig. 2 zeigt den unteren Teil der Prüfvorrichtung nach Fig. 1 in dem vergrößerten Maßstab von etwa 1 : 2,5 mit dem Prüffuß in Seitenansicht.

Wie dargestellt, ist der Tragbügel 3 mittels eines oberen Zapfens achsparallel im Träger 4 gehalten und durch eine Klemmschraube 31 gesichert. Bei der dargestellten Ausführung ist der Prüffuß in Form eines Schiebeleistens mit biegsamer Spitze 32 ausgebildet. Auf diesen Schiebeleisten 32 ist ein normaler Oberschuh mit angeklebter Laufsohle aufgezogen.

Am hinteren oberen Ende des Prüffußes bzw. Schiebeleistens 32 ist mittels eines Gabelkopfes 33 die Kolbenstange eines doppeltwirkenden Druckluftzylinders 34 angelenkt, dessen oberes Ende über ein Auge 35 mit der Tragplatte 5 gelenkig verbunden ist. Der Zylinder 34 weist an beiden Enden Druckmittelanschlüsse $P_1$, $P_2$ auf.

Auf der Grundplatte 5 ist ein einfachwirkender Druckmittelzylinder 36 angeordnet, dessen Gehäuse fest mit den Laschen 13 verbunden ist und dessen Kolbenstange 37 an den auf der Tragplatte 5 montierten hinteren Lagerböcken 9, 10 befestigt ist. Dieser Zylinder 36 weist einen Druckmittelanschluß $P_3$ auf.

Bei einem Prüfvorgang wird bei nach oben gefahrenem Trägerwagen 22 in die obere Kammer des Druckmittelzylinders 34 über den Anschluß $P_1$ Druckluft eingespeist, so daß der Prüffuß 1 zusammen mit dem Oberschuh 32 in die ausgezogen dargestellte Lage geschwenkt wird. Die vom Druckmittelzylinder erzeugte Kraft reicht jedoch nicht aus, um das Gewicht des Trägerwagens incl. der sonstigen Bauteile der Tragvorrichtung zu tragen. Bei einer vom Druckmittelzylinder 24 gesteuerten Absenkbewegung des Trägerwagens setzt der Prüffuß 1 bzw. der Oberschuh 32 zuerst mit der nach unten weisenden Absatzkante auf dem Bodenbelag auf. Da die im Zylinder 34 erzeugte Kraft kleiner als das auf den Prüffuß einwirkende Gesamtgewicht ist, verschwenkt der Prüffuß um die Absatzkante in die gestrichelt dargestellte Lage, in welcher seine Schuhsohle voll auf dem Bodenbelag 27 ruht. Während dieser Schwenkbewegung hat das Fuß- bzw. Knöchelgelenk 2 eine bogenförmig nach vorne gerichtete Absenkbewegung ausgeführt und befindet sich in einer mittleren Lage 2a. Aufgrund der starren Verbindungsmittel zwischen dem Fußgelenk 2 und der Tragplatte 5 erfolgte eine Horizontalverschiebung dieser Tragplatte 5 bzw. ihrer Lagerböcke gegenüber den an den Laschen 13 fest montierten Führungsstangen 11, 12, wobei die Kolbenstange 37 in den Zylinder 36 teilweise einfährt. In diesem Moment hat sich die Kolbenstange 25 des Hauptzylinders 24 von der Brücke 26 gelöst und dabei den Schalter 30 betätigt, auf dessen Signal hin die obere Kammer des Schwenkzylinders 34 entlüftet und die untere Kammer über den Anschluß $P_2$ mit Druckmittel beaufschlagt wird. Die von diesem eingespeisten Druckmittel erzeugte Kraft ist größer als die auf den Prüffuß einwirkende Gewichtskraft, so daß der Prüffuß in seinem hinteren Teil angehoben und in die in Fig. 2 strichpunktiert dargestellte Position bewegt wird. Dabei wandert das Knöchelgelenk 2 aus der Stellung 2a in die Stellung 2b nach vorwärts-aufwärts und die Tragplatte 5 in ihren leichtgängigen Führungen zusammen mit dem daran starr befestigten Träger 4 in die strichpunktiert angedeutete vordere Endstellung. Durch Beaufschlagen des Hauptzylinders 24 mit Druckluft wird der Prüffuß 1 zusammen mit dem aufgeleisteten Oberschuh 32 in seine angehobene Ausgangsstellung zurückgebracht. Gleichzeitig wird Druckluft über den Anschluß $P_3$ in den horizontalen Stellzylinder 36 eingeführt, so daß der Kolben den Prüfschuh in seine in Fig. 2 linke Ausgangsstellung verschiebt. Durch die Aktivierung des Schalters 13 wird die untere Arbeitskammer des Schwenkzylinders 34 über den Anschluß $P_2$ entlüftet und dessen obere Arbeitskammer über den Anschluß $P_1$ mit Druck beaufschlagt, wodurch der Prüffuß 1 in seine Ausgangslage mit abgesenktem Absatz zurückkehrt. Der Schritt- bzw. Abrollvorgang kann danach in der vorstehend beschriebenen Weise wiederholt werden.

Zur Ermittlung der Reibung zwischen der Schuhsohle und dem Bodenbelag 27 wird über einen Feindruckregler dosiertes Druckmittel während jedes Prüfvorganges in den horizontalen Stellzylinder 36 eingespeist, wobei dieser Druck bei jedem wiederholten Prüfvorgang um einen vorgegebenen Betrag erhöht wird. Der im Stellzylinder 36 herrschende Druck erzeugt eine horizontale Kraft, die über die Kolbenstange 27 und die Lagerböcke 8, 10 auf die Tragplatte 5 übertragen wird. Sobald der Druck im Stellzylinder 36 und die von diesem erzeugte horizontale Kraft einen ausreichend großen Wert erreicht hat, um die Vorwärtsbewegung des Prüffußes zu unterbinden, erfolgt eine Gleitbewegung der Schuhsohle auf dem Bodenbelag, was bedeutet, daß die Haftreibungsgrenze zwischen der Schuhsohle und dem Bodenbelag überschritten worden ist. Aus der Größe dieser horizontalen Gegenkraft und aus der auf den Prüffuß einwirkenden Gewichtskraft kann der Haftreibungs-Grenzkoeffizient errechnet werden.

Zur Bestimmung des Gleitreibungs-Grenzkoeffizienten wird bei Prüfungsbeginn in den Stellzylinder 36 ein ausreichend hoher Druck eingespeist, so daß der Prüfschuh beim Auftreffen auf den Bodenbelag gleitet und keine Abrollbewegung ausführt. Der Druck im Stellzylinder 36 wird bei den nachfolgenden Prüfvorgängen stufenweise mittels des Feindruckreglers abgesenkt, bis die Schuhsohle auf dem Bodenbelag 27 zu haften beginnt und der Fuß eine Abrollbewegung ausführt. Der in diesem Zustand herrschende Druck im Zylinder 36 kann mittels eines Feindruck-Manometers angezeigt und zur Berechnung des Gleitreibungs-Grenzkoeffizienten herangezogen werden.

Um möglichst praxisnahe Prüfergebnisse zu erhalten, sollte der Abrollvorgang des menschlichen Fußes so genau wie möglich nachgeahmt werden. Hierzu dient die besondere Ausbildung des Prüffußes, der im Bereich der Leistenspitze einen hinter den Ballenpunkten beginnenden und schräg nach vorn oben bis oberhalb der Zehenbeuge verlaufenden Abschnitt 38 aus einem weichelastischen Kunststoff oder Gummimaterial besitzt. Die Härte dieses Spitzenteils sollte etwa 50 shore A betragen.

Die Erfindung ist nicht auf das dargestellte Ausführungsbeispiel beschränkt, sondern umfaßt verschiedene Abwandlungen. So können z. B. statt der Druckmittelzylinder auch andere Linearantriebe mit Elektromotoren verwendet werden. Ferner kann auch der Bodenbelag mit einer Halterung in Längsrichtung verschiebbar ausgebildet werden, wobei in diesem Falle ein dem Dosierzylinder 36 entsprechendes Bauelement zur Erzeugung einer genau einstellbaren Gegenkraft an der Halterung des Bodenbelags angreift.

Die dargestellte Ausführung mit dem im Trog 28 auswechselbar angeordneten Bodenbelag 27 hat allerdings den Vorteil, daß der Trog z. B. mit Flüssigkeiten, wie Öl, Wasser usw., sowie mit anderen Medien (Schnee) zumindest teilweise gefüllt werden kann, so daß zusätzlich verschiedene äußere Bedingungen simuliert werden können.

## Ansprüche

1. Verfahren zur Bestimmung des Reibungsverhaltens von Schuhen auf Bodenbelägen, bei dem ein auf einem Prüffuß angeordneter Schuh zyklisch und mit einstellbarer Absenkkraft auf den Bodenbelag abgesenkt und eine beginnende Rutschbewegung seiner Laufsohle auf dem Bodenbelag als Maß für den Reibungswert zwischen Laufsohle und Bodenbelag erfaßt wird,
**dadurch gekennzeichnet,**
daß der Schuh während seines Prüfvorganges mit einem vorbestimmten Drehmoment um sein Fußgelenk verschwenkt wird, welches dabei eine Bewegung in Längsrichtung ausführt,
daß eine entgegen dieser Längsbewegung wirkende Gegenkraft von steuerbarer Größe erzeugt wird, und
daß diejenige Größe dieser Gegenkraft erfaßt wird, bei welcher das Fußgelenk unter gleichzeitigem Durchrutschen der Laufsohle auf dem Bodenbelag zum Stillstand kommt

2. Verfahren nach Anspruch 1,
dadurch gekennzeichnet,
daß die Kraft zum Verschwenken des Prüffußes während einer Aufsetzphase des Prüfschuhs mit abgesenktem Absatz kleiner und in einer Endphase größer als die Absenkkraft gewählt wird.

3. Verfahren nach Anspruch 1 oder 2,
dadurch gekennzeichnet,
daß die der Längsbewegung des Fußgelenks entgegenwirkende Kraft auf die Halterung des Prüffußes ausgeübt wird

4. Verfahren nach Anspruch 1 oder 2,
dadurch gekennzeichnet,
daß die der Längsbewegung des Fußgelenkes entgegenwirkende Kraft auf die horizontal verschiebbare Halterung des Bodenbelags ausgeübt wird.

5. Verfahren nach einem der Ansprüche 1 bis 4,
dadurch gekennzeichnet,
daß in einem ersten Prüfvorgang die Gegenkraft größer als die die Längsbewegung des Fußgelenks erzeugende horizontale Komponente der Absenkkraft gewählt wird, so daß ein Rutschen der Laufsohle auf dem Bodenbelag eintritt, und
daß in nachfolgenden Prüfvorgängen die Größe dieser Gegenkraft stufenweise so lange vermindert wird, bis eine Längsbewegung des Fußgelenkes erfolgt.

6. Vorrichtung zur Bestimmung des Reibungsverhaltens von Schuhen auf einem Bodenbelag, bestehend
- aus einer Tragkonstruktion für den Bodenbelag,
- aus einem über ein Fuß- bzw. Knöchelgelenk und ein Gelenkgestänge an einer Hubvorrichtung befestigten Prüffuß, der mit einstellbarer Kraft auf den Bodenbelag absenkbar ist, und
- aus Steuermitteln, die beim Abrutschen des abgesenkten Schuhs auf dem Bodenbelag den Reibungswert bestimmen,
**dadurch gekennzeichnet,,**
daß der Prüffuß (1) horizontal gegen eine steuerbare Kraft verschiebbar am Gelenkgestänge befestigt ist und
daß an seiner Ferse ein Antriebsaggregat (34) angelenkt ist, welches den Prüffuß (1) um sein Fuß- bzw. Knöchelgelenk (2) mit einstellbarer Kraft verschwenkt.

7. Vorrichtung nach Anspruch 6,
dadurch gekennzeichnet,
daß der Prüffuß (1) über einen austauschbaren Tragbügel (3) an einem in Schuh-Längsrichtung verschiebbaren Schlitten (5) befestigt ist, der einen die steuerbare Gegenkraft erzeugenden Stellzylinder (36) trägt.

8. Vorrichtung nach Anspruch 6 oder 7,
dadurch gekennzeichnet,
daß als Schwenkantrieb für den Prüffuß ein doppeltwirkender Luftdruckzylinder (34) zwischen dem Schlitten (5) und der Ferse des Prüffußes (1) angeordnet ist.

9. Vorrichtung nach einem der Ansprüche 6 bis 8,
dadurch gekennzeichnet,
daß der Prüffuß (1) in seinem Vorderteil einen elastisch verformbaren Abschnitt (38) aufweist.

10. Vorrichtung nach einem der Ansprüche 6 bis 9,
dadurch gekennzeichnet,
daß der Schlitten (5) über eine leichtgängige Längsführung (11, 12) am unteren Ende einer begrenzt querverschiebbaren Gelenklasche (13) gehaltert ist.

11. Vorrichtung nach Anspruch 6,
dadurch gekennzeichnet,
daß die Halterung des Bodenbelags in einer Tragkonstruktion horizontal verschiebbar ist und daß der die horizontale Gegenkraft erzeugende Stellantrieb an dieser Belag-Halterung angreift.

12. Vorrichtung nach Anspruch 6 oder 11,
dadurch gekennzeichnet,
daß die Halterung des Bodenbelags vertikal bewegbar abgestützt ist.

Fig. 1

Fig. 2